# FASCICULE DE BREVET EUROPEEN

(11) **EP 4 084 922 B1**
(45) Date de publication et mention de la délivrance du brevet: **31.01.2024**
(21) Numéro de dépôt: 20845418.1
(22) Date de dépôt: 15.12.2020
(51) Int. Cl.: B23B 31/26, B23B 31/28, B23Q 5/32, B23Q 5/40

(54) **ELECTRO-BROCHE A AVANCE INTEGREE AVEC CHANGEMENT AUTOMATIQUE DE PORTE-OUTIL**
ELEKTROSPINDEL MIT INTEGRIERTEM VORTRIEB MIT AUTOMATISCHEM WERKZEUGHALTERWECHSEL
ELECTROSPINDLE WITH INTEGRATED FEED WITH AUTOMATIC TOOL HOLDER CHANGE

(30) Priorité: 31.12.2019 FR 1915764
(43) Date de publication de la demande: 09.11.2022
(73) Titulaire: Centre Technique Des Industries Mecaniques, 60300 Senlis (FR); Ecole Nationale Supérieure d'Arts et Métiers (ENSAM), 75013 Paris (FR)
(72) Inventeur: MASCIANTONIO, Ugo, 59267 Proville (FR); MORARU, George, 13100 Aix-en-Provence (FR)
(74) Mandataire: Fédit-Loriot
(86) Numéro de dépôt international: PCT/FR2020/052440
(87) Numéro de publication internationale: WO 2021/136893

(56) Documents cités:
- WO-A1-2015/196856
- DE-U1-202014 104 118
- FR-A1- 3 018 712

## Description

La présente invention concerne le domaine des machines-outils, en particulier les machines-outils à commande numérique. Elle concerne plus particulièrement une électro-broche pour une telle machine.

L'électro-broche est une broche équipée d'au moins un moteur électrique et d'un porte-outil, qui fait l'interface entre la machine et l'outil coupant qu'elle met en rotation. On connaît dans l'état de la technique des broches qui se distinguent des broches conventionnelles en ce qu'elles présentent une architecture dite à avance intégrée. Dans cette architecture, la broche comprend un arbre d'entraînement possédant deux mouvements indépendants, à savoir un mouvement de rotation et un mouvement de translation, commandables chacun par une chaîne d'actionnement.

Une telle architecture de broche est connue notamment par l'exemple qu'en donne le document FR3018712. La broche décrite dans ce document comporte un arbre porte-outil monté de façon à pouvoir pivoter autour d'un axe de rotation et se déplacer axialement le long de l'axe de rotation. Pour ce faire, l'arbre est relié à deux moteurs rotatifs, à savoir un premier moteur relié à un organe d'accouplement en liaison glissière avec un premier tronçon de l'arbre pour entraîner l'arbre en rotation et un deuxième moteur relié à un écrou en liaison hélicoïdale avec un deuxième tronçon de l'arbre pour déplacer axialement l'arbre, les moteurs étant reliés à une unité de commande agencée pour piloter les moteurs indépendamment l'un de l"autre. Ainsi, dans cette architecture, l'arbre porte-outil est constitué de deux tronçons, un premier tronçon cannelé situé à l'avant de la broche, possédant une liaison glissière avec l'organe d'accouplement actionné par le premier moteur, l'ensemble organe d'accouplement et premier moteur constituant le module d'actionnement du mouvement de rotation de l'arbre porte-outil, et un deuxième tronçon fileté situé à l'arrière de la broche, possédant une liaison hélicoïdale avec l'écrou actionné par le deuxième moteur, l'ensemble écrou et deuxième moteur constituant le module d'actionnement du mouvement d'avance de l'arbre porte-outil.

Ainsi, la vitesse de rotation et la vitesse de déplacement sont réglables indépendamment l'une de l'autre au moyen de chaque moteur dont l'agencement coaxial assure en outre une compacité relative de la machine, qui peut encore être optimisée lorsque les premier et deuxième moteurs son coaxiaux à l'arbre porte-outil.

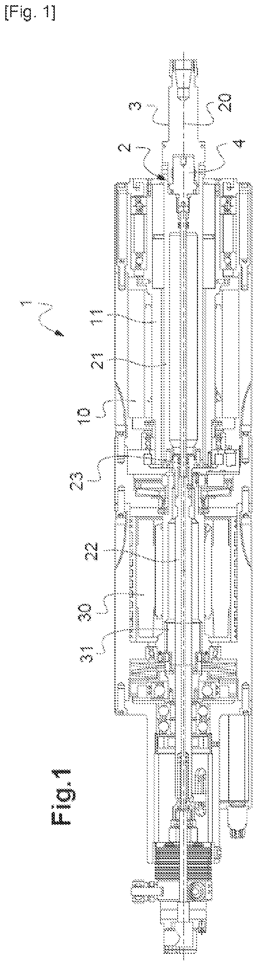

La figure 1 illustre une vue en coupe d'une broche 1 selon cette architecture.

L'arbre porte-outil 2 de la broche 1 présente une extrémité avant sur laquelle est monté le porte-outil 3, par l'intermédiaire d'un système d'attachement 4, pouvant être un système de type HSK, normalisé, aussi appelé cône-face, particulièrement approprié tant pour les changements d'outils automatiques que pour les changements manuels. Toutefois, l'interface entre le porte-outil et la broche pourrait relever de normes ou de standards propriétaires différents.

L'arbre porte-outil 2 est monté pour pivoter autour d'un axe de rotation 20 et se déplacer axialement le long de l'axe de rotation 20. L'arbre 2 est relié à deux moteurs électriques rotatifs à savoir un premier moteur 10 pour l'entraînement en rotation et un deuxième moteur 30 pour le déplacement axial. Plus précisément, le premier moteur 10 a un rotor solidaire en rotation d'un organe d'accouplement 11 agencé pour être en liaison glissière avec un premier tronçon 21 de l'arbre 2 pour entraîner l'arbre porte-outil 2 en rotation. L'organe d'accouplement 11 est par exemple un manchon intérieurement cannelé. Le premier tronçon est un tronçon cannelé. Autrement dit, le manchon 11 est en liaison pivot par rapport au bâti de la machine et en en liaison glissière par rapport au tronçon cannelé 21 de l'arbre porte-outil 2. Le manchon 11 est fixe axialement.

Le deuxième moteur 30 a un rotor solidaire en rotation d'un écrou 31 engagé sur un deuxième tronçon constitué par uin tronçon fileté 22 de l'arbre porte-outil 2, formant ainsi une liaison hélicoïdale permettant de déplacer axialement l'arbre 2 lorsqu'on impose une vitesse relative entre l'organe d'accouplement 11 et l'écrou 31, c'est-à-dire qu'on fait tourner à des vitesses différentes ces deux éléments.

L'arbre porte-outil est donc agencé de telle manière que le tronçon cannelé 21 et le tronçon fileté 22 soient distincts et se succèdent le long de l'axe de rotation 20, respectivement d'avant en arrière. Les deux tronçons 21 et 22 de l'arbre d'entraînement sont ici reliés l'un a l'autre par une douille de liaison 23 fixée aux extrémités adjacentes respectives du tronçon cannelé 21 et du tronçon fileté 22, Autrement dit, le tronçon fileté 21 de l'arbre 2 est en liaison complète (encastrement) avec le tronçon fileté 22 de l'arbre porte-outil. Ainsi, d'un point de vue cinématique le tronçon cannelé 21 et le tronçon fileté 22 de l'arbre porte-outil constituent une même pièce.

Cependant, cette architecture rend les systèmes classiques de changement automatique de porte-outil, de type HSK par exemple, impossibles à intégrer.

En effet, dans les broches d'architecture conventionnelle, c'est-à-dire sans mouvement d'avance intégré, le système d'attachement HSK du porte-outil monté à l'extrémité avant de l'arbre d'entraînement du porte-outil est classiquement actionné en desserrage du porte-outil par un dispositif d'actionnement. Ce dispositif d'actionnement est ainsi capable de placer automatiquement le porte-outil serré sur le système d'attachement HSK monté sur la broche dans un état desserré pour permettre le changement de porte-outil. Le dispositif d'actionnement comprend classiquement une tige de commande pouvant être coulissée de manière axiale dans l'arbre porte-outil de la broche conventionnelle, le système d'attachement du porte-outil pouvant être déplacé par l'intermédiaire de la tige de commande entre une position de serrage et une position de desserrage, tandis qu'un dispositif engendrant une force de serrage et, en particulier, un dispositif à ressort, est associé à la tige de commande de façon à générer la force de serrage du système d'attachement du porte-outil. Le dispositif d'actionnement comprend également un module d'actionnement disposé à l'arrière de l'arbre porte-outil de la broche, par lequel le système d'attachement peut être déplacé dans la position de desserrage par l'intermédiaire de la tige de commande à l'encontre de la force de serrage du dispositif à ressort. Ce module d'actionnement peut être actionné de manière hydraulique, pneumatique ou encore électrique.

Or, dans les architectures de broche à avance intégrée, telle que présentée en référence à la figure 1, du fait de la présence du tronçon fileté 22 de l'arbre porte-outil 2, la mise en oeuvre du dispositif d'actionnement du système d'attachement HSK pour le changement automatique du porte-outil, tel que décrit ci-dessus, est rendue impossible, notamment en ce qui concerne la disposition du module d'actionnement. Aussi, selon l'architecture de la figure 1, le changement de porte-outil 3 implique d'amener l'arbre porte-outil 2 dans sa position la plus à droite sur la figure, correspondant à la course maximale de l'outil, dans laquelle on procède au changement manuel du porte-outil.

On ne connaît pas actuellement de système capable d'adresser la problématique de changement automatique de porte-outil dans une broche présentant une architecture à avance intégrée. En particulier, se pose le problème de pouvoir générer l'action nécessaire au serrage/desserrage du système d'attachement du porte-outil, notamment de type HSK, dans une broche à avance intégrée.

Un but de l'invention est de résoudre ce problème.

A cet effet, l'invention concerne une broche d'usinage comprenant un arbre porte-outil présentant une extrémité avant sur laquelle est apte à être monté un porte-outil par l'intermédiaire d'un système d'attachement entre le porte-outil et l'extrémité avant de l'arbre, la broche comprenant un premier actionneur d'entraînement de l'arbre relié à un organe d'accouplement en liaison glissière avec un premier tronçon de l'arbre pour entraîner l'arbre en rotation et un deuxième actionneur d'entraînement relié à un écrou en liaison hélicoïdale avec un deuxième tronçon de l'arbre pour déplacer axialement l'arbre, lesdits premier et deuxième tronçons s'étendant successivement sur une longueur commune de l'arbre entre l'extrémité avant de l'arbre et une extrémité opposée de l'arbre, la broche étant caractérisée en ce qu'elle comprend une tige de commande du système d'attachement du porte-outil, reliée au deuxième tronçon de l'arbre par une liaison complète, et en ce qu'elle comprend des moyens de blocage montés mobiles entre le premier tronçon et le deuxième tronçon de l'arbre par l'intermédiaire de moyens de basculement, entre une première position dans laquelle le deuxième tronçon de l'arbre est en liaison complète avec le premier tronçon de l'arbre, et une deuxième position dans laquelle le deuxième tronçon de l'arbre est en liaison glissière avec le premier tronçon de l'arbre, autorisant un mouvement axial du deuxième tronçon par rapport au premier tronçon pour permettre de déplacer axialement la tige de commande sous l'action du deuxième actionneur d'entraînement de façon à commander le système d'attachement dans une position de desserrage du porte-outil.

Avantageusement, le premier tronçon et le deuxième tronçon de l'arbre sont reliés entre eux par une douille coaxiale auxdits premier et deuxième tronçons d'arbre, ladite douille étant en liaison complète avec le premier tronçon de l'arbre et en liaison glissière avec le deuxième tronçon de l'arbre.

Avantageusement, les moyens de blocage comprennent une pluralité de cames de blocage montées à pivotement, présentant une surface de commande orientée globalement radialement vers l'extérieur et une surface de blocage apte à être positionnée en mise en prise avec des surfaces de butée respectives en regard l'une de l'autre du premier et du deuxième tronçon d'arbre, dans ladite première position, et à être positionnée hors de mise en prise desdites surfaces de butée respectives, dans ladite deuxième position, sous l'action des moyens de basculement sur ladite surface de commande.

Avantageusement, la surface de blocage des cames est sollicitée de manière élastique dans ladite première position.

Selon un mode de réalisation, les cames de blocage sont montées à pivotement selon un axe perpendiculaire à l'axe de l'arbre porte-outil.

Selon un autre mode de réalisation, les cames de blocage sont montées à pivotement selon un axe parallèle à l'axe de l'arbre porte-outil.

Avantageusement, les moyens de basculement sont constitués par des tiges d'actionneur s'étendant dans un plan perpendiculaire à l'axe de l'arbre d'entraînement, lesdites tiges d'actionneurs étant aptes à être actionnées pour faire basculer lesdites cames de blocage dans ladite deuxième position lorsque ledit arbre porte-outil est avancée dans une position prédéterminée de changement de porte-outil dans laquelle lesdites tiges d'actionneurs sont en regard des surface de commande respectives des cames de blocage.

Avantageusement, les tiges d'actionneur peuvent être actionnées de manière hydraulique, pneumatique ou électrique.

Selon une variante de réalisation, les moyens de basculement peuvent être constitués par l'organe d'accouplement en liaison glissière par rapport au premier tronçon de l'arbre porte-outil et fixe axialement, ledit organe d'accouplement venant en contact coulissant avec la surface de commande des cames de blocage sous l'effet de l'avancée de l'arbre porte-outil dans une position prédéterminée de changement de porte-outil, afin de faire basculer les cames de blocage dans ladite deuxième position lorsque la position prédéterminée de changement de porte-outil est atteinte.

Avantageusement, le système d'attachement est un système d'attachement de type HSK.

D'autres caractéristiques et avantages de la présente invention apparaîtront plus clairement à la lecture de la description suivante donnée à titre d'exemple illustratif et non limitatif et faite en référence aux dessins annexés :
[Fig. 1] est une vue schématique en coupe d'une broche présentant une architecture dite à avance intégrée, comme décrite en préambule ;
[Fig. 2] est une vue schématique en coupe de la zone de jonction entre les premier et deuxième tronçons de l'arbre porte-outil dans une broche à avance intégrée selon un premier mode de réalisation de l'invention, avec les moyens de blocage de l'invention dans une première position dite de blocage axial, où aucun mouvement axial du deuxième tronçon par rapport au premier tronçon n'est autorisé, cette première position étant retenue pour un mode de fonctionnement normal de la broche (usinage, positionnement etc.) ;
[Fig. 3] correspond à la vue de la figure 2, avec les moyens de blocage de l'invention placés cette fois-ci dans une deuxième position, dite de déblocage axial, autorisant un mouvement axial du deuxième tronçon par rapport au premier tronçon de l'arbre porte-outil, cette deuxième position étant retenue pour un mode de fonctionnement correspondant à un changement automatique du porte-outil de la broche ;
[Fig. 4] est une vue schématique en coupe de la broche de l'invention, illustrée dans une phase intermédiaire par rapport aux vues des figures 2 et 3, où l'arbre porte-outil est amenée dans une position prédéterminée de changement du porte-outil ;
[Fig. 5] correspond à la vue de la figure 3 et illustre le mouvement axial d'avance du deuxième tronçon par rapport au premier tronçon, autorisé par le basculement des moyens de blocage dans la deuxième position ;
[Fig. 6] est une vue schématique en coupe de la broche de l'invention illustrant une variante de réalisation concernant le basculement des moyens de blocage de leur position de blocage axial à leur position de déblocage axial ;
[Fig. 7] correspond à la vue de la figure 6, où les moyens de blocage sont basculé en position de déblocage axial.

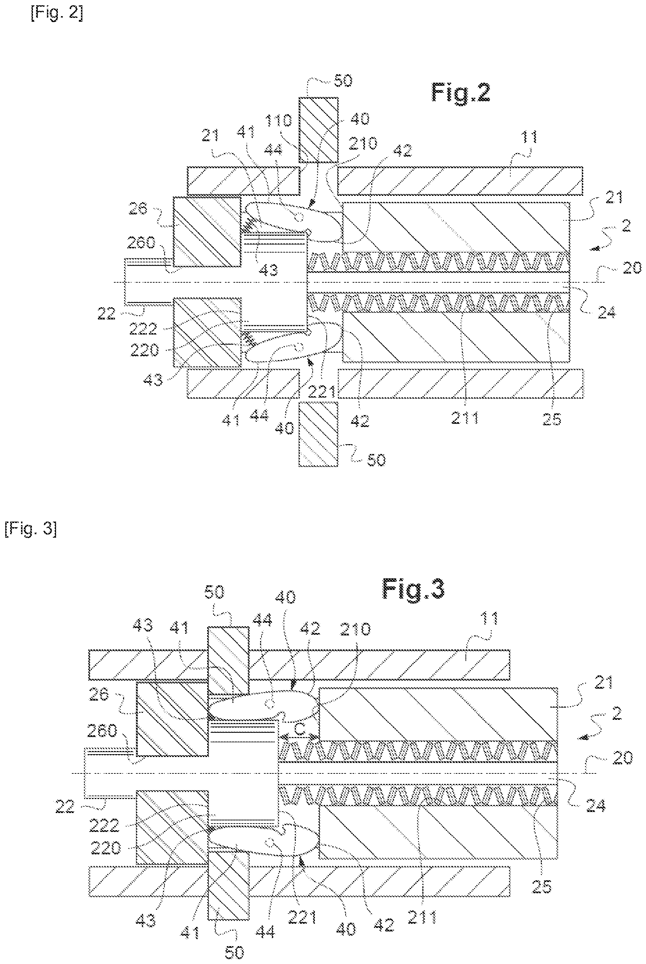

Dans ce qui va suivre, les mêmes références numériques sont utilisées pour décrire les mêmes parties des différentes figures. Par ailleurs, les mêmes références numériques telles qu'utilisées sur la figure 1 représentent les mêmes parties sur les figures 2 et suivantes.

Partant d'une architecture connue de broche à avance intégrée comme décrite en référence à la figure 1, la zone de jonction entre le premier tronçon 21, cannelé, de l'arbre porte-outil 2 et le deuxième tronçon 22, fileté, de l'arbre porte-outil 2 est profondément aménagée comme il va maintenant être décrit plus en détail, en référence aux figures 2 et suivantes, de façon à permettre que le tronçon fileté 22 de l'arbre puisse être tantôt en liaison complète avec le tronçon cannelé 21 de l'arbre, lors des phases de fonctionnement normal de la broche, tantôt en liaison glissière avec ce même tronçon, lors des phases de changement du porte-outil.

On utilise ainsi avantageusement la capacité de la broche à générer un mouvement d'avance axial du tronçon fileté 22 de l'arbre via le deuxième moteur relié à l'écrou en liaison hélicoïdale avec le tronçon fileté 22, pour générer l'action nécessaire au desserrage du système d'attachement 4 du porte-outil 3, lorsque le tronçon fileté 22 de l'arbre est en liaison glissière avec le tronçon cannelé, autorisant un mouvement axial du tronçon fileté par rapport au tronçon cannelé. Ainsi, dans cette configuration, grâce à l'utilisation d'un actionneur déjà présent dans la broche, en l'occurrence le deuxième moteur, on évite d'utiliser un autre moyen d'actionnement dédié de forte puissance, comme c'est le cas pour les dispositifs d'actionnement classiques en serrage et desserrage des systèmes d'attachement de porte-outil, mis en œuvre dans les broches conventionnelles.

Par liaison complète entre deux pièces, on entend dans le cadre de la présente invention, toute liaison n'autorisant aucun degré de liberté d'une pièce par rapport à l'autre. Il peut s'agir par exemple d'une liaison par vis, par collage, par soudage, etc.

Dans la description qui va suivre, on conviendra que les termes "avant" et "arrière" désignent respectivement des éléments ou des positions orientés respectivement vers la droite et vers la gauche sur les figures.

En référence à la figure 2, est plus précisément représentée en coupe la zone de jonction du tronçon fileté 22 et du tronçon cannelé 21, se succédant d'arrière en avant le long de l'arbre porte-outil 2 de la broche. Comme déjà décrit en référence à la figure 1, le tronçon cannelé 21 de l'arbre porte-outil 2 est en liaison glissière avec le manchon 11, qui est en liaison pivot par rapport au bâti de la machine. Autrement dit, le tronçon cannelé 21 est mobile axialement par rapport au manchon 11, qui lui est fixe axialement et susceptible d'être entraîné en rotation par le premier moteur décrit à la figure 1 et non représenté ici.

Une tige de commande 24 du système d'attachement du porte-outil (non représenté sur la figure 2) monté à l'extrémité avant de l'arbre porte-outil 2, est reliée au tronçon fileté 22 de l'arbre 2 par une liaison complète. Autrement dit, le tronçon fileté 22 de l'arbre porte-outil et la tige de commande 24 forment une seule pièce d'un point de vie cinématique.

La tige de commande 24 présente une extrémité arrière encastrée au niveau d'une portion d'extrémité avant 220 du tronçon fileté 22, qui est délimitée par des surfaces de butées avant 221 et arrière 222, s'étendant radialement à l'axe 20 de l'arbre porte-outil 2. La tige de commande 24 s'étend depuis cette portion d'extrémité avant 220 du tronçon fileté 22 en passant à travers une portion creuse axiale 211 du tronçon cannelé 21 de l'arbre porte-outil 2, dans laquelle la tige de commande 24 est autorisée à coulisser, jusqu'à une extrémité avant reliée au système d'attachement du porte-outil. Le système d'attachement du porte-outil est conçu pour être déplacé par l'intermédiaire de la tige de commande 24 entre une position de serrage et une position de desserrage du porte-outil, un dispositif de rappel 25, ici un dispositif à ressort 25, est associé à la tige de commande 24 de façon à générer la force de serrage du système d'attachement du porte-outil.

La portion d'extrémité avant 220 du tronçon fileté 22 de l'arbre 2 s'étend dans un évidement du tronçon cannelé 21 de l'arbre 2, en regard d'une surface de butée arrière 210 du tronçon cannelé 21, s'étendant radialement à l'axe 20 de l'arbre porte-outil. Autrement dit, les surfaces de butée radiales avant et arrière respectivement 221 et 210 du tronçon fileté 22 et du tronçon cannelé 21 se font face, et s'étendent sensiblement à distance l'une de l'autre dans la configuration de la figure 2.

Par ailleurs, le tronçon fileté 22 et le tronçon cannelé 21 de l'arbre porte-outil 2 sont reliés entre eux par une douille 26 coaxiale auxdits tronçons, en liaison complète avec le tronçon cannelé 21 de l'arbre, d'une part, et en liaison glissière avec le tronçon fileté 22 de l'arbre, d'autre part. La douille 26 supprime tout mouvement de rotation relatif entre le tronçon fileté 22 et le tronçon cannelé 21 de l'arbre.

La douille 26 est disposée à l'arrière de la portion d'extrémité avant 220 du tronçon fileté 22 de l'arbre porte-outil.

Elle est par exemple fixée par des vis sur le tronçon cannelé 21 de l'arbre. Autrement dit, le tronçon cannelé 21 de l'arbre 2 et la douille 26 forment une seule pièce d'un point de vue cinématique. La partie du tronçon fileté 22 de l'arbre s'étendant à l'arrière de la portion d'extrémité avant 220 est par exemple munie de cannelures femelles dans lesquelles s'engagent des cannelures mâles 260 dont est munie la douille 26, de sorte que le tronçon fileté 22 de l'arbre peut être apte à coulisser axialement par rapport au tronçon cannelé 21 de l'arbre.

Précisément, dans la configuration de la figure 2, cette aptitude du tronçon fileté 22 à coulisser axialement par rapport au tronçon cannelé 21, n'est pas autorisée.

En effet, la zone de jonction entre les tronçons filetés 22 et cannelés 21 de l'arbre porte-outil 2 est pourvue de moyens de blocage 40, montés mobiles entre le tronçon fileté 22 et le tronçon cannelé 21 de l'arbre entre une première position, dite de blocage axial, correspondant à celle de la figure 2, dans laquelle le tronçon fileté 22 de l'arbre est en liaison complète avec le tronçon cannelé 21 de l'arbre, et une deuxième position, dite de déblocage axial, correspondant à celle de la figure 3, dans laquelle le tronçon fileté 22 de l'arbre est en liaison glissière avec le tronçon cannelé 21 de l'arbre, autorisant un déplacement axial du tronçon fileté 22 par rapport au tronçon cannelé 21.

Ces moyens de blocage sont avantageusement constitués d'une pluralité de cames de blocage 40, montées à pivotement autour d'un axe de pivotement 44 respectif. Chaque came de blocage 40 présente une surface de commande 41 orientée globalement radialement vers l'extérieur et s'étendant à l'arrière de la came par rapport à son axe de pivotement 44, et une surface de blocage 42, à l'opposé de la surface de commande par rapport à l'axe de pivotement. Cette surface de blocage 42 est apte à être positionnée en mise en prise avec les surfaces de butée respectives en regard l'une de l'autre 221 et 210 du tronçon fileté 22 et du tronçon cannelé 21 de l'arbre, correspondant à la position de blocage axial telle qu'illustrée à la figure 2, et à être positionnée hors de mise en prise desdites surfaces de butée respectives, correspondant à la position de déblocage axial telle qu'illustré à la figure 3. Le passage de la position de blocage axial des cames 40 à leur position de déblocage axial est effectué sous l'action de moyens de basculement, agissant sur la surface de commande 41 des cames pour les faire pivoter autour de leur axe de pivotement 44.

Selon l'exemple de réalisation de la figure 2, les moyens de basculement sont constitués par des tiges d'actionneur 50 qui s'étendent dans un plan perpendiculaire à l'axe 20 de l'arbre d'entraînement 2. Elles sont par exemple agencées en périphérie extérieure du manchon 11 et sont prévues pour passer à travers des lumières correspondantes 110 pratiquées dans la paroi du manchon 11.

Avantageusement, la surface de blocage 42 des cames 40 est sollicitée de manière élastique en mise en prise avec les surfaces de butée respectives en regard l'une de l'autre 221 et 211 du tronçon fileté 22 et du tronçon cannelé 21 de l'arbre, par l'intermédiaire d'un ressort 43. Ce dernier assure ainsi la position de blocage des cames 40 en mode de fonctionnement normal de la broche.

Selon l'exemple de réalisation illustré sur les figures, les cames de blocage 40 sont montées à pivotement selon un axe 44 perpendiculaire à l'axe 20 de l'arbre porte-outil. Elles sont contenues dans un plan essentiellement parallèle à l'axe 20 de l'arbre porte-outil. Elles sont par exemple logées dans des rainures axiales ménagées dans le tronçon cannelé 22 de l'arbre porte-outil 2.

En variante, les cames de blocage 40 pourraient être contenues dans un plan essentiellement perpendiculaire à l'axe 20 de l'arbre porte-outil 2. Autrement dit, selon cette variante, elles sont montées à pivotement selon un axe parallèle à l'axe 20 de l'arbre porte-outil.

Dans la configuration de la figure 2, le tronçon fileté 22 est en liaison complète avec le tronçon cannelé 21 de l'arbre porte-outil 2. En effet, d'une part, le tronçon cannelé 21 ne peut pas tourner par rapport au tronçon fileté 22, du fait de la douille 26. D'autre part, le tronçon fileté 22 et le tronçon cannelé 21 ne peuvent pas avoir de mouvement axial relatif entre eux, car la surface de blocage 42 des cames 40 est forcée en butée contre les surfaces de butée respectives avant et arrière en regard l'une de l'autre du tronçon fileté 22 et du tronçon cannelé 21. Autrement dit, la douille 26 supprime le mouvement de rotation relative entre le tronçon fileté 22 et le tronçon cannelé 21 de l'arbre 2 et les cames 40, dans leur position de blocage axial, comme illustré à la figure 2, suppriment le mouvement axial relatif entre le tronçon fileté 22 et le tronçon cannelé 21 de l'arbre 2. En outre, la surface de butée arrière 222 de la portion d'extrémité avant 220 du tronçon fileté 22 est en butée contre la douille 26.

Cette configuration de fonctionnement correspond au mode de fonctionnement normal de la broche (usinage, positionnement, etc.).

Les cames de blocage 40 sont au moins au nombre de deux, préférentiellement au moins trois, encore plus préférentiellement au moins quatre, de façon à assurer une bonne rigidité de contact, en dépit des vibrations générées lors du mode de fonctionnement normal de la broche.

On va maintenant décrire l'autre mode de fonctionnement correspondant au changement du porte-outil. Pour ce faire, on amène tout d'abord l'arbre porte-outil 2 dans une position de changement de porte-outil prédéterminée. Il peut s'agir par exemple de la position la plus en avant de l'arbre 2.

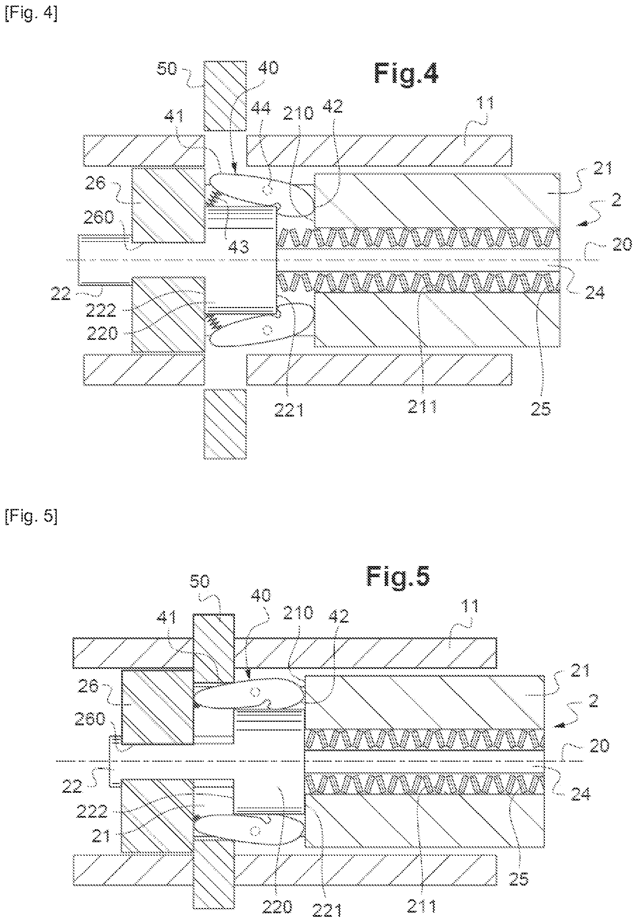

Dans cette position de changement de porte-outil prédéterminée, illustrée à la figure 4, les surfaces de commande 41des cames de blocage 40 sont disposées en regard des lumières correspondantes 110 pratiquées dans la paroi du manchon 11 et donc en regard des tiges d'actionneurs 50. Ainsi, les tiges d'actionneurs 50 sont prêtes à être actionnées pour faire basculer les cames de blocage 40 de leur première position, dite de blocage, illustrée à la figure 2, à leur deuxième position, dite de de déblocage, illustrée à la figure 3.

Les tiges d'actionneur 50 peuvent être actionnées de manière hydraulique, pneumatique ou électrique. Quoi qu'il en soit, la puissance requise ici pour l'actionnement des cames de blocage pour le passage de leur première position à leur deuxième position, est relativement faible. Elle doit au minimum être suffisante pour s'opposer à la force de rappel des ressorts 43.

Ainsi, comme illustré à la figure 3, une fois l'arbre porte-outil amené dans la position de changement de porte-outil prédéterminée, les tiges d'actionneurs 50 sont actionnées en direction des cames de blocage 40, de façon à exercer un appui sur les surfaces de commandes 41 des cames pour les faire pivoter dans leur position de déblocage. Dans cette position, les surfaces de blocage 42 des cames sont basculées hors de mise en prise des surfaces de butée respectives en regard l'une de l'autre 221 et 210 du tronçon fileté 22 et du tronçon cannelé 21 de l'arbre.

Dans cette position, le tronçon fileté 22 de l'arbre porte-outil 2 est donc débloqué axialement par rapport au tronçon cannelé 21 et est autorisé à coulisser axialement par rapport à celui-ci grâce à la liaison glissière avec la douille 26. Sous l'effet de l'actionnement du deuxième moteur 30 (non représenté ici), utilisé normalement pour le déplacement axial de l'arbre porte-outil 2, entraînant en rotation l'écrou engagé sur le tronçon fileté 22, comme décrit en référence à la figure 1, le tronçon fileté 22 peut être entraîné dans un mouvement d'avance par rapport au tronçon cannelé 21, qui lui est bloqué axialement par rapport au tronçon fileté 22. Selon cet exemple de réalisation, l'arrêt axial du tronçon cannelé 21 est réalisé par une mise en butée avec les tiges d'actionneur 50 descendues au travers des lumières 110 du manchon 11.

Ainsi, l'entraînement du tronçon fileté 22 génère un mouvement d'avance du tronçon fileté 22 par rapport au tronçon cannelé 21 selon une course d'avance déterminée C, permettant de déplacer le système d'attachement du porte-outil dans la position de desserrage, par l'intermédiaire de la tige de commande 24, à l'encontre de la force de serrage du dispositif à ressort 25. Cette position de desserrage du système d'attachement du porte-outil est illustrée à la figure 5, et correspond à la position où la surface de butée radiale avant 221 de la portion d'extrémité avant 220 du tronçon fileté 22 vient en butée avec la surface de butée radiale arrière 210 du tronçon cannelé 21. La course d'avance déterminée est par exemple de l'ordre de quelques millimètres et correspond à la distance entre la surface de butée radiale avant 221 de la portion d'extrémité avant 220 du tronçon fileté 22 et la surface de butée radiale arrière 210 du tronçon cannelé 21, lorsque la surface de butée radiale arrière 222 de la portion d'extrémité avant 220 du tronçon fileté 22 est en butée avec la douille 26.

Le mouvement d'avance du tronçon fileté 22, lorsque ce dernier est en liaison glissière avec le tronçon cannelé 21, permet donc avantageusement de générer l'action nécessaire au desserrage du porte-outil.

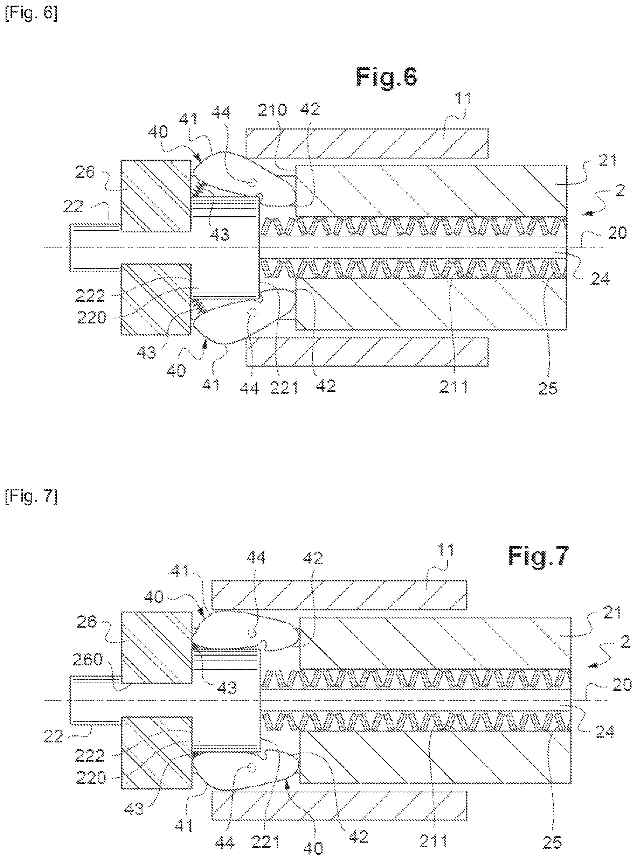

Les figures 6 et 7 illustrent une variante de réalisation des moyens de basculement qui sont utilisés pour faire pivoter les cames de blocage 40 depuis leur position de blocage axial vers leur position de déblocage axial. Selon cette variante de réalisation, les tiges d'actionneurs 50 ne sont plus nécessaires pour ce faire. En référence à la figure 6, les cames de blocage 40 sont positionnées dans leur position de blocage axial, où le tronçon fileté 22 et le tronçon cannelé 21 de l'arbre porte-outil 2 sont en liaison complète. Toujours en référence à la figure 6, l'arbre porte-outil 2 est amené dans la position de changement de porte-outil prédéterminée. Les cames de blocage 40 sont disposées de telle sorte que, lors du mouvement d'avance de l'arbre 2 vers la position de changement de porte-outil prédéterminée, le manchon 11 vient en contact coulissant avec la surface de commande 41 des cames de blocage 40 sous l'effet de l'avance de l'arbre 2. Le manchon 11 appuie ainsi sur les cames 40 en s'opposant à la force de rappel des ressorts 43, pour les faire basculer dans leur position de déblocage axial, lorsque la position de changement de porte-outil prédéterminée est atteinte.

Dans cette position de changement de porte-outil prédéterminée, illustrée à la figure 7, les surfaces de blocage 42 des cames 40 sont basculées hors de mise en prise des surfaces de butée respectives en regard l'une de l'autre 221 et 210 du tronçon fileté 22 et du tronçon cannelé 21 de l'arbre. Le tronçon fileté 22 de l'arbre porte-outil 2 est donc débloqué axialement par rapport au tronçon cannelé 21 et est autorisé à coulisser axialement par rapport à celui-ci grâce à la liaison glissière avec la douille 26. Dans cette position, la douille 26 est en butée avec le manchon 11 par l'intermédiaire d'une surface de butée radiale périphérique externe 261 de la douille 26. La mise en butée de cette surface de butée 261 de la douille 26 avec le manchon 11 permet de bloquer axialement le tronçon cannelé 21 de l'arbre porte-outil par rapport au tronçon fileté 22. Toutefois, le blocage axial du tronçon cannelé 21 par rapport au tronçon fileté 22 pourrait être assuré par toute autre surface de butée appropriée.

Puis, de la même façon qu'expliqué précédemment en référence à la figure 5, l'entraînement du tronçon fileté 22 ainsi débloqué axialement par rapport au tronçon cannelé, est utilisé pour générer le mouvement d'avance de la tige de commande 24 selon la course d'avance déterminée, nécessaire au déplacement du système d'attachement du porte-outil dans la position de desserrage.

## Revendications

1. Broche d'usinage comprenant un arbre porte-outil (2), présentant une extrémité avant sur laquelle est apte à être monté un porte-outil (3) par l'intermédiaire d'un système d'attachement (4) entre le porte-outil et l'extrémité avant de l'arbre, la broche comprenant un premier actionneur d'entraînement (10) de l'arbre relié à un organe d'accouplement (11) en liaison glissière avec un premier tronçon (21) de l'arbre pour entraîner l'arbre en rotation et un deuxième actionneur d'entraînement (30) relié à un écrou (31) en liaison hélicoïdale avec un deuxième tronçon (22) de l'arbre pour déplacer axialement l'arbre, lesdits premier et deuxième tronçons s'étendant successivement sur une longueur commune de l'arbre entre l'extrémité avant de l'arbre et une extrémité opposée de l'arbre, la broche étant **caractérisée en ce qu'**elle comprend une tige de commande (24) du système d'attachement du porte-outil, reliée au deuxième tronçon (22) de l'arbre par une liaison complète, et **en ce qu'**elle comprend des moyens de blocage (40) montés mobiles entre le premier tronçon (21) et le deuxième tronçon (22) de l'arbre par l'intermédiaire de moyens de basculement (50), entre une première position dans laquelle le deuxième tronçon (22) de l'arbre est en liaison complète avec le premier tronçon (21) de l'arbre, et une deuxième position dans laquelle le deuxième tronçon (22) de l'arbre est en liaison glissière avec le premier tronçon (21) de l'arbre, autorisant un mouvement axial du deuxième tronçon (22) par rapport au premier tronçon (21) pour permettre de déplacer axialement la tige de commande (24) sous l'action du deuxième actionneur d'entraînement (10) de façon à commander le système d'attachement (4) dans une position de desserrage du porte-outil.

2. Broche selon la revendication 1, **caractérisée en ce que** le premier tronçon (21) et le deuxième tronçon (22) de l'arbre sont reliés entre eux par une douille (26) coaxiale auxdits premier et deuxième tronçons d'arbre, ladite douille (26) étant en liaison complète avec le premier tronçon (21) de l'arbre et en liaison glissière avec le deuxième tronçon (22) de l'arbre.

3. Broche selon la revendication 1 ou 2, **caractérisée en ce que** les moyens de blocage comprennent une pluralité de cames de blocage (40) montées à pivotement, présentant une surface de commande (41) orientée globalement radialement vers l'extérieur et une surface de blocage (42) apte à être positionnée en mise en prise avec des surfaces de butée respectives (210, 221) en regard l'une de l'autre du premier et du deuxième tronçon (21, 22) d'arbre, dans ladite première position, et à être positionnée hors de mise en prise desdites surfaces de butée respectives, dans ladite deuxième position, sous l'action des moyens de basculement (50) sur ladite surface de commande (41).

4. Broche selon la revendication 3, **caractérisée en ce que** la surface de blocage des cames (40) est sollicitée de manière élastique dans ladite première position.

5. Broche selon la revendication 3 ou 4, **caractérisée en ce que** les cames de blocage (40) sont montées à pivotement selon un axe (44) perpendiculaire à l'axe (20) de l'arbre porte-outil (2).

6. Broche selon la revendication 3 ou 4, **caractérisée en ce que** les cames de blocage (40) sont montées à pivotement selon un axe parallèle à l'axe (20) de l'arbre porte-outil (2).

7. Broche selon l'une quelconque des revendications 3 à 6, **caractérisée en ce que** les moyens de basculement sont constitués par des tiges d'actionneur (50) s'étendant dans un plan perpendiculaire à l'axe (20) de l'arbre d'entraînement (2), lesdites tiges d'actionneurs (50) étant aptes à être actionnées pour faire basculer lesdites cames de blocage (40) dans ladite deuxième position lorsque ledit arbre porte-outil (2) est avancée dans une position prédéterminée de changement de porte-outil dans laquelle lesdites tiges d'actionneurs (50) sont en regard des surface de commande (41) respectives des cames de blocage (40).

8. Broche selon la revendication 7, **caractérisée en ce que** les tiges d'actionneur (50) sont actionnées de manière hydraulique, pneumatique ou électrique.

9. Broche selon l'une quelconque des revendications 3 à 6, **caractérisée en ce que** les moyens de basculement sont constitués par l'organe d'accouplement (11) en liaison glissière par rapport au premier tronçon (21) de l'arbre porte-outil et fixe axialement, ledit organe d'accouplement venant en contact coulissant avec la surface de commande (41) des cames de blocage (40) sous l'effet de l'avancée de l'arbre porte-outil dans une position prédéterminée de changement de porte-outil, afin de faire basculer les cames de blocage dans ladite deuxième position lorsque la position prédéterminée de changement de porte-outil est atteinte.

10. Broche selon l'une quelconque des revendications précédentes, **caractérisé en ce que** le système d'attachement est un système d'attachement de type HSK.

## Patentansprüche

1. Bearbeitungsspindel, die eine Werkzeughalterwelle (2) umfasst, die ein vorderes Ende aufweist, an dem ein Werkzeughalter (3) mit Hilfe eines Befestigungssystems (4) zwischen dem Werkzeughalter und dem vorderen Ende der Welle montiert werden kann, wobei die Spindel einen ersten Antriebsaktuator (10) der Welle umfasst, der mit einem Kupplungselement (11) verbunden ist, das mit einem ersten Abschnitt (21) der Welle in Gleitverbindung steht, um die Welle drehend anzutreiben, und einen zweiten Antriebsaktuator (30), der mit einer Mutter (31) verbunden ist, die mit einem zweiten Abschnitt (22) der Welle in Schraubenverbindung steht, um die Welle axial zu verschieben, wobei sich der erste und der zweite Abschnitt nacheinander entlang einer gemeinsamen Länge der Welle zwischen dem vorderen Ende der Welle und einem gegenüberliegenden Ende der Welle erstrecken, wobei die Spindel **dadurch gekennzeichnet ist, dass** sie eine Steuerstange (24) für das Befestigungssystem des Werkzeughalters umfasst, die durch eine feste Verbindung mit dem zweiten Abschnitt (22) der Welle verbunden ist, und dadurch, dass sie Blockiermittel (40) umfasst, die mit Hilfe von Schaltmitteln (50) zwischen dem ersten Abschnitt (21) und dem zweiten Abschnitt (22) der Welle beweglich zwischen einer ersten Position, in der der zweite Abschnitt (22) der Welle in fester Verbindung mit dem ersten Abschnitt (21) der Welle steht, und einer zweiten Position, in der der zweite Abschnitt (22) der Welle in Gleitverbindung mit dem ersten Abschnitt (21) der Welle steht, montiert sind, wodurch eine axiale Bewegung des zweiten Abschnitts (22) in Bezug auf den ersten Abschnitt (21) gestattet wird, um zu ermöglichen, dass die Steuerstange (24) unter der Wirkung des zweiten Antriebsaktuators (10) axial verschoben wird, um das Befestigungssystem (4) in eine Position des Lösens des Werkzeughalters zu steuern.

2. Spindel nach Anspruch 1, **dadurch gekennzeichnet, dass** der erste Abschnitt (21) und der zweite Abschnitt (22) der Welle durch eine Hülse (26) miteinander verbunden sind, die koaxial zu dem ersten und dem zweiten Abschnitt der Welle ist, wobei die Hülse (26) in fester Verbindung mit dem ersten Abschnitt (21) der Welle steht und in Gleitverbindung mit dem zweite Abschnitt (22) der Welle steht.

3. Spindel nach Anspruch 1 oder 2, **dadurch gekennzeichnet, dass** die Blockiermittel eine Vielzahl von schwenkbar montierten Blockiernocken (40) umfassen, die eine im Allgemeinen radial nach außen gerichtete Steuerfläche (41) und eine Blockierfläche (42) aufweisen, die dazu ausgelegt ist, in Eingriff mit jeweils einander zugewandten Anschlagflächen (210, 221) des ersten und des zweiten Abschnitts (21, 22) der Welle in der ersten Position und außer Eingriff mit den jeweiligen Anschlagflächen in der zweiten Position unter der Wirkung der Schaltmittel (50) auf der Steuerfläche (41) positioniert zu werden.

4. Spindel nach Anspruch 3, **dadurch gekennzeichnet, dass** die Blockierfläche der Nocken (40) elastisch in die erste Position gespannt wird.

5. Spindel nach Anspruch 3 oder 4, **dadurch gekennzeichnet, dass** die Blockiernocken (40) schwenkbar entlang einer Achse (44) senkrecht zur Achse (20) der Werkzeughalterwelle (2) montiert sind.

6. Spindel nach Anspruch 3 oder 4, **dadurch gekennzeichnet, dass** die Blockiernocken (40) schwenkbar entlang einer Achse parallel zur Achse (20) der Werkzeughalterwelle (2) montiert sind.

7. Spindel nach einem der Ansprüche 3 bis 6, **dadurch gekennzeichnet, dass** die Schaltmittel aus Betätigungsstangen (50) bestehen, die sich in einer Ebene senkrecht zur Achse (20) der Antriebswelle (2) erstrecken, wobei die Betätigungsstangen (50) ausgelegt sind, um betätigt zu werden, so dass die Blockiernocken (40) in die zweite Position geschaltet werden, wenn die Werkzeughalterwelle (2) zum Wechseln des Werkzeughalters in eine vorbestimmte Position vorgeschoben wird, in der die Betätigungsstangen (50) den jeweiligen Steuerflächen (41) der Blockiernocken (40) gegenüberstehen.

8. Spindel nach Anspruch 7, **dadurch gekennzeichnet, dass** die Betätigungsstangen (50) hydraulisch, pneumatisch oder elektrisch betätigt werden.

9. Spindel nach einem der Ansprüche 3 bis 6, **dadurch gekennzeichnet, dass** die Schaltmittel aus dem Kopplungselement (11) bestehen, das in Bezug auf den ersten Abschnitt (21) der Werkzeughalterwelle in Gleitverbindung steht und axial fixiert ist, wobei das Kopplungselement unter der Wirkung des Vorschiebens der Werkzeughalterwelle in eine vorbestimmte Position zum Wechseln des Werkzeughalters mit der Steuerfläche (41) der Blockiernocken (40) in Gleitkontakt gelangt, um die Blockiernocken in die zweite Position zu schalten, wenn die vorbestimmte Position zum Wechseln des Werkzeughalters erreicht ist.

10. Spindel nach einem der vorhergehenden Ansprüche, **dadurch gekennzeichnet, dass** das Befestigungssystem ein Befestigungssystem vom HSK-Typ ist.

## Claims

1. A machining spindle comprising a tool-holding shaft (2), having a front end on which a tool holder (3) is adapted to be mounted via an attachment system (4) between the tool holder and the front end of the shaft, the spindle comprising a first drive actuator (10) of the shaft connected to a coupling member (11) in sliding connection with a first segment (21) of the shaft to drive the shaft in rotation and a second drive actuator (30) connected to a nut (31) in helical connection with a second segment (22) of the shaft to axially displace the shaft, said first and second segments extending successively over a common length of the shaft between the front end of the shaft and an opposite end of the shaft, the spindle being **characterised in that** it comprises a rod (24) for controlling the attachment system of the tool holder, which is connected to the second segment (22) of the shaft by a complete connection, and **in that** it comprises blocking means (40) movably mounted between the first segment (21) and the second segment (22) of the shaft via tilting means (50), between a first position in which the second segment (22) of the shaft is in complete connection with the first segment (21) of the shaft, and a second position in which the second segment (22) of the shaft is in sliding connection with the first segment (21) of the shaft, enabling an axial movement of the second segment (22) relative to the first segment (21) to allow axially displacing the control rod (24) under the action of the second drive actuator (10) so as to control the attachment system (4) in a position of loosening the tool holder.

2. The spindle according to claim 1, **characterised in that** the first segment (21) and the second segment (22) of the shaft are interconnected by a socket (26) which is coaxial with said first and second shaft segments, said socket (26) being in complete connection with the first segment (21) of the shaft and in sliding connection with the second segment (22) of the shaft.

3. The spindle according to claim 1 or 2, **characterised in that** the blocking means comprise a plurality of blocking cams (40) which are pivotally mounted, having a control surface (41) oriented generally radially outwards and a blocking surface (42) capable of being positioned in engagement with respective abutment surfaces (210, 221) facing each other of the first and second shaft segments (21, 22), in said first position, and of being positioned out of engagement of said respective abutment surfaces, in said second position, under the action of the tilting means (50) on said control surface (41).

4. The spindle according to claim 3, **characterised in that** the blocking surface of the cams (40) is elastically biased in said first position.

5. The spindle according to claim 3 or 4, **characterised in that** the blocking cams (40) are pivotally mounted along an axis (44) perpendicular to the axis (20) of the tool-holding shaft (2).

6. The spindle according to claim 3 or 4, **characterised in that** the blocking cams (40) are pivotally mounted along an axis parallel to the axis (20) of the tool-holding shaft (2).

7. The spindle according to any one of claims 3 to 6, **characterised in that** the tilting means are constituted by actuator rods (50) extending in a plane perpendicular to the axis (20) of the drive shaft (2) said actuator rods (50) being capable of being actuated to tilt said blocking cams (40) into said second position when said tool-holding shaft (2) is advanced into a predetermined tool holder change position in which said actuator rods (50) face the respective control surfaces (41) of the blocking cams (40).

8. The spindle according to claim 7, **characterised in that** the actuator rods (50) are hydraulically, pneumatically or electrically actuated.

9. The spindle according to any one of claims 3 to 6, **characterised in that** the tilting means are constituted by the coupling member (11) in sliding connection relative to the first segment (21) of the tool-holding shaft and axially fixed, said coupling member coming into sliding contact with the control surface (41) of the blocking cams (40) under the effect of the advancement of the tool-holding shaft into a predetermined tool holder change position, in order to tilt the blocking cams into said second position when the predetermined tool holder change position is reached.

10. The spindle according to any one of the preceding claims, **characterised in that** the attachment system is an HSK type attachment system.
